(19) Europäisches Patentamt
European Patent Office
Office européen des brevets

(11) **EP 2 144 127 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(51) Int Cl.:
***G05B 19/4103*** *(2006.01)* ***G05B 19/418*** *(2006.01)*

(21) Anmeldenummer: **08012313.6**

(22) Anmeldetag: **08.07.2008**

(54) **Verfahren und Steuergerät zum Aufsynchronisieren eines Aufnehmers eines Handlingsgerätes**

Method and control device for synchronising a collector of a handling device

Procédé et appareil de commande pour la synchronisation d'un récepteur d'un appareil de manipulation

(84) Benannte Vertragsstaaten:
**DE**

(43) Veröffentlichungstag der Anmeldung:
**13.01.2010 Patentblatt 2010/02**

(73) Patentinhaber: **Siemens Aktiengesellschaft 80333 München (DE)**

(72) Erfinder:
• **Hartmann, Guido
51377 Leverkusen (DE)**
• **Heber, Tino, Dr.
09599 Freiberg (DE)**
• **Heydenreich, Andre
08062 Zwickau (DE)**
• **Hüfner, Holger
02625 Bautzen (DE)**
• **Kram, Raimund
91056 Erlangen (DE)**

(56) Entgegenhaltungen:
**EP-A- 1 935 788** **JP-A- 2006 347 754**
**US-A- 3 283 918** **US-A- 4 086 522**
**US-A- 4 663 726** **US-A- 4 772 831**
**US-A1- 2007 030 271**

EP 2 144 127 B1

**Beschreibung**

Die Erfindung betrifft ein Verfahren zum Aufsynchronisieren eines Aufnehmers eines mehrachsigen Handlingsgerätes mit einem aufzunehmenden Objekt, welches von einer Fördereinrichtung mitgeführt wird, und/oder zum Aufsynchronisieren des Aufnehmers mit einer angetriebenen Fördereinrichtung, um ein bereits aufgenommenes Objekt dort abzusetzen. Der Aufnehmer wird entlang einer Bewegungsbahn aufsynchronisiert.

Die Erfindung betrifft weiterhin die Anwendung eines derartigen Verfahrens zum aufsynchronisierten Aufnehmen von Objekten, die von einer Fördereinrichtung mitgeführt werden, und/ oder zum aufsynchronisierten Absetzen von bereits aufgenommenen Objekten auf einer angetriebenen Fördereinrichtung. Sie betrifft zudem die Anwendung eines derartigen Verfahrens zum Verpacken von Verpackungsobjekten mittels einer mehrachsigen Verpackungsmaschine, insbesondere mittels eines Pickers.

Weiterhin betrifft die Erfindung ein Datenspeichermedium mit einem in maschinenlesbarer Form gespeicherten Bahnaufsynchronisier-Programmmodul zur Durchführung eines derartigen Verfahrens auf zumindest einem Steuergerät zum Steuern eines jeweiligen Aufnehmers zumindest eines mehrachsigen Handlingsgerätes.

Die Erfindung betrifft darüber hinaus ein Steuergerät zum Steuern eines Aufnehmers zumindest eines mehrachsigen Handlingsgerätes, wobei der jeweilige Aufnehmer zum Aufnehmen von Objekten, die von zumindest einer Fördereinrichtung mitgeführt werden, und/oder zum Absetzen von bereits aufgenommenen Objekten, die auf der zumindest einen angetriebenen Fördereinrichtung abgesetzt werden sollen, vorgesehen ist. Ein derartiges Steuergerät ist mit einem Antrieb des jeweiligen Handlingsgerätes zur Ausgabe von Stellkoordinaten für den jeweiligen Greifer verbunden. Das Steuergerät ist mit Mitteln zur Weg- und Geschwindigkeitserfassung der jeweiligen Fördereinrichtung bzw. der jeweiligen mitgeführten Verpackungsobjekte verbunden. Zudem weist das Steuergerät eine prozessorgestützte Steuereinheit zum Ausführen zumindest eines Bahnaufsynchronisier-Programmmoduls zur Durchführung eines derartigen Verfahrens auf. Vorzugsweise ist das Steuergerät eine Maschinensteuerung mit einer "Motion Control"-Funktionalität, wobei diese die Stellkoordinaten zur Bewegung der Maschinenachsen an den Antrieb zur elektrischen Ansteuerung entsprechender Aktoren des Handlingsgerätes, wie z.B. von Motoren, überträgt. Die Ansteuerung kann alternativ oder zusätzlich auf pneumatischem oder hydraulischem Wege erfolgen.

Weiterhin betrifft die Erfindung ein mehrachsiges Handlingsgerät mit einem derartigen Steuergerät zum Steuern des Greifers des Handlingsgerätes sowie einen Verbund aus zumindest einem mehrachsigen Handlingsgerät und aus zumindest einem derartigen Steuergerät zum Steuern des Greifers des jeweiligen mehrachsigen Handlingsgerätes.

Aus der europäischen Patentanmeldung EP 1 935 788 A1 sind Mittel zur Beförderung von Nahrungsmitteln in Maschinen offenbart. Gemäß einem dortigen Ausführungsbeispiel ist ein mehrachsiger Roboter dafür vorgesehen, mittels einer daran angeordneten Zwischenfördereinrichtung Produkte aus mehreren übereinander angeordneten Fördereinrichtungen geschwindigkeitssynchronisiert aufzunehmen und diese in entsprechende Behältnisse einer Verpackungsmaschine abzulegen. Die Fördereinrichtungen können Förderbänder oder Rollenbahnen sein.

Aus dem US-Patent US 4,663,726 A ist ein Verfahren zur Bewegungssteuerung eines Roboter-Greiforgans bekannt. Bei dem dortigen Verfahren werden von einer Bedienperson mittels eines Bediengerätes ein Start- und Zielpunkt mit dazwischenliegenden Punkten für eine Verfahrbewegung des Greiforgans eingegeben. Aus diesen Punkten wird mittels einer Polynom-Interpolation eine Trajektorie (Spline) durch diese Punkte ermittelt, entlang der später das Greiforgan verfährt. Die Polynom-Interpolation erfolgt so, dass die Geschwindigkeit und die Beschleunigung in den Punkten gleichmäßig ist, um eine sanfte Verfahrbewegung des Greiforgans zu ermöglichen.

Aus dem Patent Abstracts of Japan JP 2006 347754 A ist ein Artikelfördergerät mit einer Fördereinrichtung und einem Artikelhalter offenbart, der einen Zusammenbruch der Synchronisation zwischen Fördereinrichtung und Artikelhalter verhindert. Wenn die Fördereinrichtung plötzlich stoppt, wird der Nachverfolgungsbetrieb des Artikelhalters unterbrochen, und es werden die Fördereinrichtung und der Artikelhalter mit einer vorgegebenen reduzierten Geschwindigkeit weiterbetrieben.

Das US-Patent 3,283,918 offenbart einen programmierbaren Apparat, der den Bewegungsablauf eines Greifers mit einem Objekt auf einer Fördereinrichtung koordiniert und der den Programmstart bei Erscheinen eines neuen Objekts synchronisiert.

Bei den zuvorgenannten Handlingsgeräten handelt es sich insbesondere um Roboter, das heißt um universell einsetzbare Bewegungsautomaten mit mehreren Achsen. Die Bewegungen der Maschinenachsen sind hinsichtlich der Bewegungsfolge frei programmierbar und gegebenenfalls sensorgeführt. Bei den Achsen kann es sich um translatorische und/oder um rotatorische Achsen handeln. Die betrachteten Handlingsgeräte sind mit Aufnehmern zum Aufnehmen und Absetzen von Objekten oder zum Aufnehmen von Werkzeugen, Bearbeitungswerkzeugen oder anderen Fertigungsmitteln ausrüstbar. Sie können Handhabungs-, Fertigungs- und/oder Bearbeitungsaufgaben ausführen. Je nach Ausgestaltung des Handlingsgerätes können Bewegungen in einer Fläche, wie z.B. in einer zylindrischen Fläche, oder innerhalb eines dreidimensionalen Arbeitsraums vorgenommen werden. Weitere bekannte Handlingsgeräte sind sogenannte Picker, wie z.B. zwei- oder dreidimensional arbeitende Delta-Picker. Derartige Picker werden vorzugsweise zum Verpacken von Verpackungsobjekten, wie z.B. von Pralinen, Backwaren, Schreibartikeln, medizinischen Produkten und dergleichen eingesetzt.

Bei den Fördereinrichtungen handelt es sich z.B. um angetriebene Förderbänder, Rollenbahnen, Drehteller und dergleichen. Derartige Fördereinrichtungen werden auch als Conveyor bezeichnet. Sie werden typischerweise mit einer konstanten Geschwindigkeit angetrieben, wie z.B. mittels eines Normmotors. Sie können weiterhin mit Weggebern, wie z.B. mit einem Drehgeber, ausgestattet sein. Auf Basis der erfassten Gebersignale ist dann die jeweilige Wegposition und/oder Geschwindigkeit eines bewegten Objektes ableitbar. Die Bestimmung der jeweiligen Wegposition bzw. der jeweiligen Geschwindigkeit eines bewegten Objektes kann z.B. mittels eines Steuergerätes erfolgen, welches signal- oder datentechnisch mit einem solchen Weggeber verbunden ist. Alternativ ist die jeweilige Wegposition und/oder Geschwindigkeit der Objekte über ein mit dem Steuergerät verbundenes optisches Messsystem erfassbar. Eine Messkamera ist zur optischen Erfassung der jeweiligen Objekte auf die Fördereinrichtung gerichtet. Eine geeignete Messsoftware ermittelt dann rechnerisch die aktuelle Wegposition bzw. die zugehörige Geschwindigkeit.

Häufig arbeiten ein oder mehrere Handlingsgeräte in einem Verbund mit einer oder mehreren Förderreinrich- tungen. Zur Steuerung der Handlingsgeräte kann ein gemeinsames Steuergerät oder jeweils ein Steuergerät für das jeweilige Handlingsgerät vorhanden sein. Die Handlingsgeräte können in Bezug auf die Fördereinrichtungen derart angeordnet sein, dass ein jeweiliges Handlingsgerät nur Objekte von einer zugeordneten Fördereinrichtung oder mehrere Objekte von mehreren Fördereinrichtungen aufnehmen kann. Beispielsweise kann ein Verbund zwei Picker und vier Förderbänder umfassen. Auf den vier Förderbändern wird z.B. jeweils eine Pralinensorte transportiert. Die beiden Picker können über die Steuergeräte derart angesteuert werden, dass eine gewünschte Anzahl von Pralinen je Sorte von beiden Pickern in die dafür vorgesehenen Verpackungen einsortiert wird. Der Verbund kann zudem eine weitere Fördereinrichtung aufweisen, auf welcher in analoger Weise die Verpackungen, wie z.B. Pralinenschachteln, an den beiden Pickern zum Befüllen vorbeigeführt werden.

Aus dem Stand der Technik ist es bekannt, dass der Aufnehmer entlang der kürzesten Verbindung, das heißt entlang einer Geraden, zwischen dem Startpunkt und dem berechneten Zielpunkt schnellstmöglich verfahren wird. Der Startpunkt kann, entsprechend dem vorherigen Beispiel, die letzte Position beim Befüllen der Pralinenschachtel mit einer Praline sein. Der Zielpunkt ist insbesondere diejenige Position, an welcher das aufzunehmende Objekt unter Berücksichtigung einer zu erwartenden Verfahrzeit des Aufnehmers und unter Berücksichtigung des Weitertransports mittels der Fördereinrichtung ankommen wird. Nach Aufnahme des Objektes wird der aktuelle Zielpunkt zum neuen Startpunkt für das Zurückbewegen des Aufnehmers zur nächsten Befüllungsstelle oder zurück zu einer neu zu befüllenden Pralinenschachtel. Letztere bilden den neuen Zielpunkt für den Aufnehmer.

Um die Verfahrzeit möglichst klein zu halten, wird der Aufnehmer im Rahmen der kinematischen Grenzen des Handlingsgerätes schnellstmöglich beschleunigt und kurz vor Erreichen des Zielpunkt wieder schnellstmöglich abgebremst.

Ausgehend von dem eingangs genannten Stand der Technik ist es eine Aufgabe der vorliegenden Erfindung, ein verbessertes Verfahren zur Steuerung des Aufnehmers eines Handlingsgerätes anzugeben, durch welches die Mechanik des Handlingsgerätes weniger beansprucht wird.

Es ist eine weitere Aufgabe der Erfindung, geeignete Anwendungen des Verfahrens, ein geeignetes Datenspeichermedium sowie ein geeignetes Steuergerät zum Steuern des Handlingsgerätes anzugeben. Schließlich ist es eine Aufgabe der Erfindung, ein Handlingsgerät mit einem derartigen Steuergerät sowie einen Verbund aus einem Handlingsgerät und aus einem derartigen Steuergerät anzugeben.

Die Aufgabe der Erfindung wird für das Verfahren mit den Merkmalen des Patentanspruchs 1 gelöst. Vorteilhafte Verfahrensvarianten sind in abhängigen Ansprüchen 2 bis 6 angegeben. In den Ansprüchen 7 und 8 sind vorteilhafte Anwendungen des erfindungsgemäßen Verfahrens angegeben.

Weiterhin wird die Aufgabe für das Datenspeichermedium mit den Merkmalen des Patentanspruchs 9, für das Steuergerät mit den Merkmalen des Patentanspruchs 10, für das mehrachsige Handlingsgerät mit den Merkmalen des Patentanspruchs 11 und für den Verbund aus Handlingsgerät und Steuergerät mit den Merkmalen des Patentanspruchs 12 gelöst.

Bei dem erfindungsgemäßen Verfahren wird der Aufnehmer entlang einer rechnerisch ermittelten Polynombahn $P(p)$ mindestens der 3. Ordnung zwischen einem Startpunkt und einem Zielpunkt der Aufsynchronisierbewegung aufsynchronisiert, wobei die Polynombahn $P(p)$ eine Polynombahn $P(p)$ der 5. Ordnung ist und wobei die Polynombahn $P(p)$ über den Startpunkt, den Zielpunkt, über einen jeweiligen Tangentenvektor im Start- und Zielpunkt und über einen jeweiligen Krümmungsvektor im Start und Zielpunkt festgelegt wird und wobei dem Startpunkt-Tangentenvektor beim Aufsynchronisieren des Aufnehmers aus dem Stillstand eine zum Zielpunkt weisende Richtung zugewiesen wird und wobei dem Startpunkt-Krümmungsvektor ein Nullvektor zugewiesen wird. Es wird die Polynombahn $P(p)$ über ein geschwindigkeitsstetiges Geschwindigkeitsprofil $p(t)$ abgefahren. Es wird durch das Geschwindigkeitsprofil $p(t)$ eine im Startpunkt vorliegende und eine im Zielpunkt zu erwartende Geschwindigkeit stetig fortsetzt, wobei die stetig fortzusetzende Geschwindigkeit eine Fördergeschwindigkeit des aufzunehmenden oder des abzusetzenden Objekts im Zielpunkt ist. Alternativ kann der Aufnehmer ein Bearbeitungswerkzeug aufnehmen, um ein von der Fördereinrichtung mitgeführtes Objekt, wie z.B. ein Halbzeug, aufsynchronisiert zu bearbeiten. In entsprechender Weise wird der Aufnehmer alternativ oder zusätzlich zum Absetzen des bereits aufgenommenen Objekts mit der Fördereinrichtung entlang einer rechnerisch ermittelten Polynombahn der 5. Ordnung aufsynchronisiert. Die rechnerische Ermittlung der Polynombahn erfolgt vorzugsweise mittels einer prozessorgestützten Steuereinheit, wie z.B. einer CPU. Die zur rechnerischen Ermittlung der Polynombahn erforderlichen Verfahrensschritte werden durch entsprechende Programmschritte eines Softwareprogramms ausgeführt.

Ein derartiges Geschwindigkeitsprofil kann z.B. einen trapezförmigen Verlauf aufweisen. Das Abfahren, das heißt die Umsetzung des mathematischen Bahnpolynoms in einen zeitabhängigen Bahnverlauf, kann beispielsweise mittels eines aus der Motion Control-Technik bekannten Bahninterpolators erfolgen. Ein solcher Bahninterpolator ermittelt auf der Basis des Bahnpolynoms und des zugehörigen Geschwindigkeitsprofils zyklisch zwischen dem Start- und Zielpunkt liegende Stützpunkte, entlang derer dann der Abnehmer zeitgenau verfahren wird. Die Funktionalität eines solchen Bahninterpolators wird typischerweise programmtechnisch auf einem Mikroprozessor ausgeführt.

Dadurch kann ein Aufnehmer des Handlingsgerätes vorteilhaft richtungs- und geschwindigkeitsgleich, das heißt synchron, zu einem bewegten Objekt am Start- und Zielpunkt einschwenken. Die Mechanik des Handlingsgerätes wird im Vergleich zu einem linearen Schräganlauf des Aufnehmers beim Stand der Technik mit nachteilig hoher Stoßbelastung erheblich weniger beansprucht.

Im Besonderen wird durch das Geschwindigkeitsprofil eine im Startpunkt vorliegende und eine im Zielpunkt zu erwartende Geschwindigkeit stetig fortsetzt. Mit anderen Worten kann der Abnehmer beim Abfahren eines vorherigen Bahnsegments bei Erreichen des dortigen Zielpunkts richtungsgleich und geschwindigkeitsstetig entlang des neu ermittelten Bahnsegments weitergeführt werden. Dabei wird der vorherige Zielpunkt zum neuen Startpunkt des stetig fortgesetzten Bahnsegmentes. In entsprechender Weise kann der Abnehmer bei Erreichen des Zielpunktes richtungsgleich und geschwindigkeitsstetig weiter entlang eines nachfolgenden und bereits vorausberechneten Bahnsegmentes stetig verfahren werden. In diesem Fall wird der aktuelle Zielpunkt zum neuen Startpunkt des nachfolgenden Bahnsegments.

Die stetig fortzusetzende Geschwindigkeit ist eine Fördergeschwindigkeit des aufzunehmenden oder abzusetzenden Objekts im Zielpunkt. Dadurch bewegt sich der Aufnehmer im Zielpunkt geschwindigkeitssynchron mit dem aufzunehmenden oder abzusetzenden Objekt. Typischerweise weist das Objekt die gleiche Geschwindigkeit auf wie die Fördergeschwindigkeit der zugehörigen Fördereinrichtung zum Mitführen bzw. zum Absetzen der Objekte. Dies ist z.B. bei Förderbändern oder Rollenbahnen der Fall.

Die rechnerische Ermittlung der Polynombahn erfolgt vorzugsweise mittels einer prozessorgestützten Steuereinheit, wie z.B. einer CPU. Die zur rechnerischen Ermittlung der Polynombahn erforderlichen Verfahrensschritte werden durch entsprechende Programmschritte eines Softwareprogramms ausgeführt.

Eine Polynombahn z.B. der 3. Ordnung ist wie folgt definiert:

$$\mathbf{P}(p) \;=\; \mathbf{A}_0 p^0 \;+\; \mathbf{A}_1 p^1 \;+\; \mathbf{A}_2 p^2 \;+\; \mathbf{A}_3 p^3$$

mit $0 \leq p \leq 1$, wobei p=0 auf den Beginn der Aufsynchronisierbewegung, das heißt auf den Startpunkt, und p=1 auf das Ende, das heißt auf den Endpunkt der Aufsynchronisierbewegung, abgebildet ist. Mit $\mathbf{P}$, $\mathbf{A}_0$, $\mathbf{A}_1$, $\mathbf{A}_2$ und $\mathbf{A}_3$ sind (fettgedruckt) dreidimensionale Vektoren bezeichnet, die sich typischerweise aus drei kartesischen Koordinaten X, Y, Z für die rechnerische Ermittlung einer in dem Arbeitsraum verlaufenden Bewegungsbahn zusammensetzen. Für den Fall, dass eine Polynombahn des Aufnehmers für eine Bewegung innerhalb einer Fläche vorgesehen ist, sind zweidimensionale Vektoren ausreichend. Alternativ können die Vektoren $\mathbf{P}$, $\mathbf{A}_0$, $\mathbf{A}_1$, $\mathbf{A}_2$ und $\mathbf{A}_3$ aus Polar- oder Kugelkoordinaten zusammengesetzt sein. Als Ursprung kann prinzipiell jeder ortsfeste Punkt für die rechnerische Ermittlung zugrunde gelegt werden, wie z.B. ein ausgewählter Standpunkt des Handlingsgerätes.

Allgemein sind zur Lösung eines Polynoms 3. Ordnung vier Randbedingungen zu bestimmen. Da der Start- und Zielpunkt für das "Hindurchlegen" der Polynombahn bereits bekannt bzw. ermittelbar sind, sind noch zwei weitere mathematische Randbedingungen zu bestimmen. Prinzipiell ist hier eine Vielzahl von Lösungen für die Polynombahn rechnerisch möglich.

Nach einer Verfahrensvariante, für die kein Patentschutz beantragt wird, wird diese Polynombahn der 3. Ordnung über den Startpunkt, den Zielpunkt und über jeweils einen Tangentenvektor im Start- und Zielpunkt festgelegt, wobei die Tangentialvektoren als Funktion von p aus der ersten geometrischen Ableitung der Polynombahn $\mathbf{P}(p)$ ermittelbar sind. Dadurch kann über die Festlegung des Startpunkt-Tangentenvektors und des Zielpunkt-Tangentenvektors eine Richtung der Polynombahn am Start- und Zielpunkt auf einfache Weise vorgegeben werden.

Der besondere Vorteil des erfindungsgemäßen Verfahrens ist, dass durch die Anwendung einer Polynombahn mindestens der 3. Ordnung ein im Vergleich zum Stand der Technik verbesserter Bahnverlauf in Abhängigkeit von den Start- und Zielbedingungen berechnet werden kann. Es kann folglich auf einfache Weise eine Polynombahn mit geometriestetigen Randbedingungen im Start- und Zielpunkt zum Aufsynchronisieren bestimmt werden.

Für einen Anwender können die üblicherweise sonst vorzunehmenden aufwändigen Berechnungen entfallen.

Erfindungsgemäß ist die Polynombahn eine Polynombahn der 5. Ordnung, wobei die Polynombahn über den Startpunkt, den Zielpunkt, über einen jeweiligen Tangentenvektor im Start- und Zielpunkt und über einen jeweiligen Krümmungsvektor im Start- und Zielpunkt festgelegt wird.

Eine Polynombahn der 5. Ordnung ist wie folgt definiert:

$$\mathbf{P}(p) = \mathbf{A}_0 p^0 + \mathbf{A}_1 p^1 + \mathbf{A}_2 p^2 + \mathbf{A}_3 p^3 + \mathbf{A}_4 p^4 + \mathbf{A}_5 p^5$$

mit $0 \leq p \leq 1$, wobei p=0 auf den Beginn der Aufsynchronisierbewegung, das heißt auf den Startpunkt, und p=1 auf das Ende, das heißt auf den Endpunkt der Aufsynchronisierbewegung, abgebildet ist. Mit $\mathbf{P}$, $\mathbf{A}_0$ bis $\mathbf{A}_5$ sind wiederum dreidimensionale Vektoren bezeichnet, die sich typischerweise aus drei kartesischen Koordinaten X, Y, Z als Skalare zusammensetzen. Im Bezug auf den zweidimensionalen Fall und auf das verwendete Koordinatensystem gilt das zuvor Gesagte.

Zur Lösung des Polynoms 5. Ordnung sind nun sechs mathematische Randbedingungen zu bestimmen. Die ersten vier Randbedingungen können, wie im Fall der 3. Ordnung beschrieben, bereits bestimmt werden. Die beiden letzten Randbedingungen können dadurch bestimmt werden, dass die Polynombahn zusätzlich krümmungsstetig in ihrem Verlauf zwischen dem Start- und Zielpunkt ist. Mit "krümmungsstetig" ist gemeint, dass die Änderung der Tangente entlang der Polynombahn im Sinne einer Ortskurve stetig erfolgt. Die Krümmungsvektoren sind als Funktion von p direkt aus der zweiten geometrischen Ableitung der Polynombahn $\mathbf{P}(p)$ ermittelbar.

Der besondere Vorteil ist, dass auf besonders einfache Weise eine Polynombahn mit geometriestetigen und zugleich krümmungsstetigen Randbedingungen zum Aufsynchronisieren bestimmt werden kann.

Erfindungsgemäß wird dem Startpunkt-Tangentenvektor beim Aufsynchronisieren des Aufnehmers aus dem Stillstand eine zum Zielpunkt weisende Richtung und dem Startpunkt-Krümmungsvektor ein Nullvektor zugewiesen. Die Bestimmung des Bahnpolynoms gestaltet sich für diesen Fall besonders einfach.

Nach einer besonders vorteilhaften Verfahrensvariante wird die Polynombahn über ein zusätzlich beschleunigungsstetiges Geschwindigkeitsprofil abgefahren. Durch das richtungsgleiche, geschwindigkeitssynchrone und nun zugleich ruckbegrenzte Einschwenken des Aufnehmers zum Objekt am Zielpunkt wird die Mechanik des Handlingsgerätes und insbesondere die des Aufnehmers nochmals deutlich weniger beansprucht.

Nach einer Verfahrensvariante wird eine im Zielpunkt zu erwartende Beschleunigung oder eine im Startpunkt bereits vorliegende Beschleunigung über das Geschwindigkeitsprofil stetig fort. Insbesondere ist dann die stetig fortzusetzende Beschleunigung eine Förderbeschleunigung des aufzunehmenden oder abzusetzenden Objekts im Zielpunkt. Diese Verfahrensvariante ist vorteilhaft bei Fördereinrichtungen, welche an un-terschiedlichen Förderpositionen unterschiedliche Fördergeschwindigkeiten aufweisen kann. Derartige Fördereinrichtungen können z.B. Förderbänder oder Rollenbahnen sein, die Beschleunigungs- und Abbremsstreckenbereiche für die mitzuführenden oder aufzunehmenden Objekte aufweisen.

Die Polynombahn mindestens der 3. Ordnung ist nach einer Verfahrensvariante vorzugsweise eine zwei- oder dreidimensionale Polynombahn. Vorzugsweise werden die jeweiligen, zum Abfahren der Polynombahn rechnerisch ermittelten Koordinaten des Aufnehmers über eine Kinematiktransformation in die jeweiligen Achskoordinaten des mehrachsigen Handlingsgerätes umgerechnet.

Das erfindungsgemäße Verfahren ist besonders vorteilhaft zum aufsynchronisierten Aufnehmen von Objekten, die von einer Fördereinrichtung mitgeführt werden, und/oder zum aufsynchronisierten Absetzen von bereits aufgenommenen Objekten auf einer Fördereinrichtung anwendbar. Bei den Objekten kann es sich beispielsweise um Waren, Stückgut, Backwaren, Schreibwarenartikel, medizinische Produkte und dergleichen handeln.

Weiterhin ist das erfindungsgemäße Verfahren vorteilhaft zum Verpacken von Verpackungsobjekten mittels einer mehrachsigen Verpackungsmaschine, insbesondere mittels eines Pickers, anwendbar. Gerade bei solchen Verpackungsmaschinen ist die mechanische Belastung aufgrund der langen Betriebszeit und aufgrund der hohen Verpackungsstückzahlen besonders hoch.

Weiterhin kann ein Bahnaufsynchronisier-Programmmodul zur Durchführung des erfindungsgemäßen Verfahrens auf einem Datenspeichermedium in maschinenlesbarer Form gespeichert sein. Das Programmmodul ist auf zumindest einem Steuergerät zum Steuern eines jeweiligen Aufnehmers zumindest eines mehrachsigen Handlingsgerätes ausführbar. Es ist nach Laden eines solchen Programmmoduls in den Arbeitsspeicher des Steuergerätes und nach Ausführen dieses Programmmoduls vorteilhaft ein besonders maschinenschonendes und zugleich schnelles Aufsynchronisieren des Aufnehmers mit dem mitbewegten Objekt bzw. mit der jeweiligen Fördereinrichtung möglich. Das Speichermedium kann ein optischer Datenträger, wie z.B. eine CD-ROM, eine DVD-ROM, eine Diskette, eine Flash-Speicherkarte oder ein USB-Datenspeicher, sein.

Die Aufgabe der Erfindung wird weiterhin mit einem Steuergerät zum Steuern eines Aufnehmers zumindest eines mehrachsigen Handlingsgerätes gelöst, wobei der jeweilige Aufnehmer zum Aufnehmen von Objekts, die von zumindest einer Fördereinrichtung mitgeführt werden, und/oder zum Absetzen von bereits aufgenommenen Objekten, die auf der zumindest einen Fördereinrichtung abgesetzt werden sollen, vorgesehen ist. Das erfindungsgemäße Steuergerät ist mit einem Antrieb des jeweiligen Handlingsgerätes zur Ausgabe von Stellkoordinaten für den jeweiligen Aufnehmer verbunden. Es ist zudem mit Mitteln zur Weg- und Geschwindigkeitserfassung der jeweiligen Fördereinrichtung bzw. der jeweiligen mitgeführten Objekte verbunden. Weiterhin weist ein solches Steuergerät eine prozessorgestützte Steuereinheit zum Ausführen zumindest eines Bahnaufsynchronisier-Programmmoduls zur Durchführung des erfindungsgemäßen Verfahrens auf. Die Steuereinheit ist vorzugsweise eine CPU.

Gelöst wird die Aufgabe weiterhin durch ein mehrachsiges Handlingsgerät, welches in entsprechender Weise einen Aufnehmer zum Aufnehmen von Objekten und/oder zum Absetzen von bereits aufgenommenen Objekten aufweist. Zudem weist das Handlingsgerät ein derartiges Steuergerät zum Steuern des Aufnehmers des Handlingsgerätes auf. Das Handlingsgerät kann zudem eine Antriebssteuerung aufweisen, in welcher vorzugsweise das Steuergerät integriert ist. Ein solches Handlingsgerät kann ein mehrachsiger Roboter, ein Automat oder ein Picker sein.

Schließlich sind zur Lösung der Aufgabe für den Verbund zumindest ein mehrachsiges Handlingsgerät mit jeweils einem Aufnehmer zum Aufnehmen von Objekten und/oder zum Absetzen von bereits aufgenommenen Objekten und zumindest ein derartiges Steuergerät zum Steuern des Aufnehmers des jeweiligen mehrachsigen Handlingsgerätes vorgesehen. Ein solches Steuergerät kann z.B. mehrere Steuereinheiten zum Ausführen jeweils eines Bahnaufsynchronisier-Programmmoduls für das jeweilige Handlingsgerät aufweisen. Das Steuergerät kann auch nur eine einzige Steuereinheit aufweisen, auf welcher simultan je ein Bahnaufsynchronisier-Programmmodul für jedes Handlingsgerät ausgeführt wird.

Die Erfindung sowie vorteilhafte Ausführungen der Erfindung werden im Weiteren anhand der nachfolgenden Figuren näher beschrieben. Es zeigen

FIG 1    beispielhaft eine Polynombahn, welche über ein Geschwindigkeitsprofil abgefahren wird,

FIG 2    beispielhaft eine Polynombahn, welche eine vorherige Polynombahn tangential- und krümmungsstetig fortsetzt und an eine nachfolgende Polynombahn tangential- und krümmungsstetig anschließt,

FIG 3    beispielhaft eine Programmschrittfolge S0-S7 eines Bahnaufsynchronisier-Programmmoduls zur Durchführung des erfindungsgemäßen Verfahrens,

FIG 4    beispielhaft einen Verbund aus einem Handlingsgerät mit einem Aufnehmer am Anfang einer Aufsynchronisierung und aus einem Steuergerät gemäß der Erfindung,

FIG 5    das Beispiel gemäß FIG 4 mit dem Aufnehmer am Ende der Aufsynchronisierung zur Aufnahme eines Objektes und

FIG 6    ein weiteres Beispiel für einen Verbund.

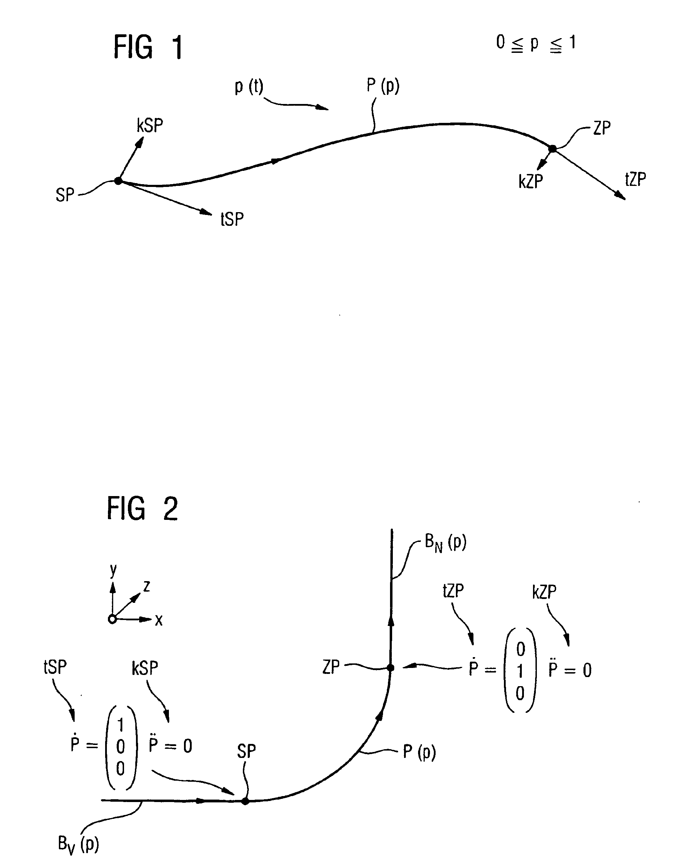

FIG 1 zeigt beispielhaft eine Polynombahn $P(p)$, welche über ein Geschwindigkeitsprofil $p(t)$ abgefahren wird. Der eingetragene Pfeil zeigt den Bahnverlauf beim Abfahren der Polynombahn $P(p)$ an. Im linken Teil der FIG 1 ist ein Startpunkt SP der Polynombahn $P(p)$ mit einem Startpunkt-Tangentenvektor tSP und einem Startpunkt-Krümmungsvektor kSP eingetragen. Im rechten Teil der FIG 1 sind der entsprechende Zielpunkt ZP, Zielpunkt-Tangentenvektor tZP und Zielpunkt-Krümmungsvektor kZP eingetragen. Über diese sechs Randbedingungen SP, ZP, tSP, tZP, kSP, kZP ist das beispielhafte Bahnpolynom $P(p)$ der 5. Ordnung bestimmbar.

FIG 2 zeigt beispielhaft eine Polynombahn $P(p)$, welche eine vorherige Bahn $B_V(p)$ tangential- und krümmungsstetig fortsetzt und an eine nachfolgende $B_N(p)$ tangential- und krümmungsstetig anschließt. Die vorherige und nachfolgende Bahn $B_V(p)$, $B_N(p)$ kann beispielsweise eine Linienbahn, eine Kreisbahn, eine weitere Polynombahn oder eine sonstige Bahn sein. Bei der gezeigten Polynombahn $P(p)$ handelt es sich wiederum um eine Polynombahn $P(p)$ der 5. Ordnung mit Start- und Zielpunkt SP, ZP. Mit X, Y, Z sind die Achsen eines beispielhaft kartesischen Bezugssystems bezeichnet. Die beiden Punkte SP, ZP weisen nicht weiter bezeichnete, dreidimensionale, kartesische Koordinaten (X, Y, Z) auf. Die zugehörigen Tangentenvektoren tSP, tZP weisen die kartesischen Koordinaten (1,0,0) sowie (0,1,0) auf. Sie sind richtungsgleich zu der an die Polynombahn $P(p)$ anschließenden vorherigen und nachfolgenden Bahn $B_V(p)$, $B_N(p)$. Die beiden Tangentenvektoren (tSP, tZP) sind dabei direkt aus der ersten geometrischen Ableitung der Polynombahn $P(p)$ ableitbar, symbolisiert durch einen Punkt über dem P von $P(p)$. Die zugehörigen Krümmungsvektoren kSP, kZP entsprechen dem Nullvektor, das heißt der zweiten geometrischen Ableitung der Polynombahn $P(p)$ im Start- und Zielpunkt SP, ZP, symbolisiert durch zwei Punkte über dem P von P(p).

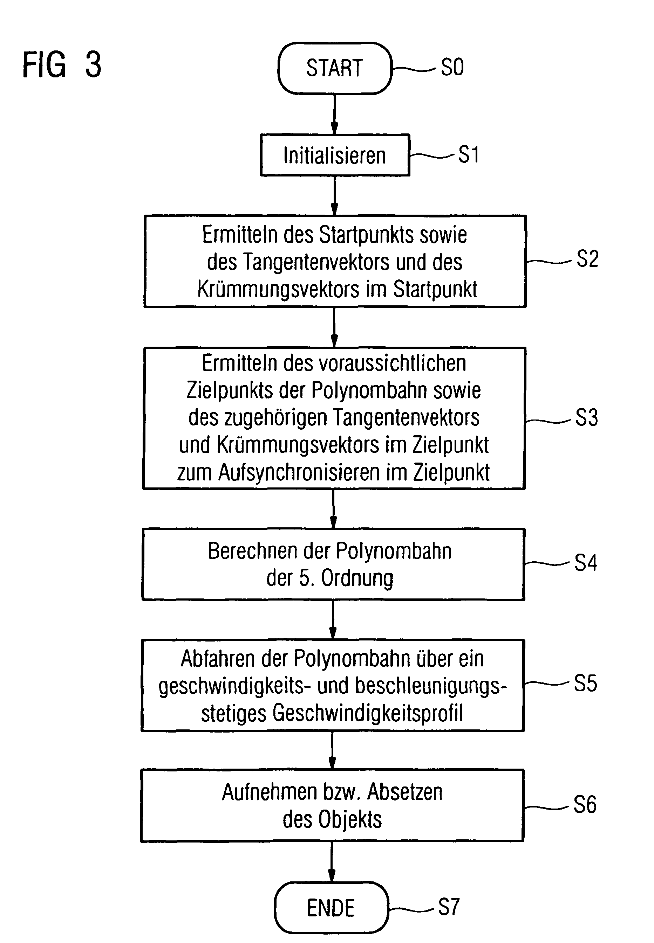

FIG 3 zeigt beispielhaft eine Programmschrittfolge S0-S7 eines Bahnoptimierungs-Programmmoduls zur Durchführung des erfindungsgemäßen Aufsynchronisierverfahrens. Ein solches Bahnoptimierungs-Programmmodul wird vorzugsweise auf einem Prozessor eines zum Steuern eines Handlingsgerätes vorgesehenen Steuergerätes ausgeführt. Bei dem Verfahren wird ein Aufnehmer des Handlingsgerätes mit einem aufzunehmenden Objekt, welches von einer Fördereinrichtung mitgeführt wird, und/oder mit einer bewegten Fördereinrichtung, auf welcher gegebenenfalls ein bereits aufgenommenes Objekt abgesetzt werden soll, aufsynchronisiert. Der Aufnehmer wird dabei entlang einer rechnerisch ermittelten Polynombahn mindestens der 3. Ordnung zwischen einem Startpunkt und einem Zielpunkt aufsynchronisiert. Im vorliegenden Beispiel weist die Polynombahn eine 5. Ordnung auf.

Mit S0 ist der Start des Bahnoptimierungs-Programmmoduls bezeichnet. Im Schritt S1 erfolgt anschließend eine Initialisierung des Steuergerätes. Diese kann z.B. einen Funktionstest der gesamten Steuerung für das zu steuernde Handlingsgerät umfassen.

Im folgenden Schritt S2 werden die Koordinaten des Startpunktes für den zu steuernden Aufnehmer sowie der zugehörige Tangentenvektor und Krümmungsvektor ermittelt. Die mehrdimensionalen Koordinaten des Startpunktes können z.B. direkt aus der gerade aktuell vorliegenden, räumlichen Position des Aufnehmers ermittelt werden.

Im Schritt S3 erfolgt die Ermittlung des voraussichtlichen Zielpunktes der Polynombahn sowie des zugehörigen Tangenten- und Krümmungsvektors im Zielpunkt. Für den Fall, dass ein Aufsynchronisieren des Aufnehmers aus dem Stillstand heraus erfolgt, wird vorzugsweise dem Startpunkt-Tangentenvektor eine zum Zielpunkt weisende Richtung und dem Startpunkt-Krümmungsvektor ein Nullvektor zugewiesen.

Die entsprechenden Koordinaten des Zielpunktes können z.B. aus der aktuellen Position des zu erfassenden Objektes ermittelt werden, wobei die Verfahrstrecke des Objektes mittels einer Fördereinrichtung rechnerisch berücksichtigt wird. Dies kann auf Basis einer bekannten, typischerweise konstanten Fördergeschwindigkeit und auf Basis einer prognostizierbaren bzw. interpolierbaren Verfahrzeit des Aufnehmers vom Startpunkt zum Zielpunkt erfolgen. Unter Umständen kann bei in etwa gleichen Bewegungsabläufen eine mittlere Verfahrzeit und folglich eine mittlere Verfahrstrecke des Objektes angesetzt werden.

Nachfolgend erfolgt im Schritt S4 die Berechnung der Polynombahn der 5. Ordnung, welche im ermittelten Start- und Zielpunkt tangentenstetig und im Verlauf des gesamten Polynoms zugleich krümmungsstetig ist.

Im Schritt S5 wird die Polynombahn über ein geschwindigkeits- und zugleich beschleunigungsstetiges Geschwindigkeitsprofil abgefahren. Wesentlich ist, dass das Abfahren der Polynombahn hier ruckbegrenzt erfolgt. Das Geschwindigkeitsprofil kann beispielsweise einen trapezförmigen oder kubischen Verlauf aufweisen. Im Besonderen wird durch das Geschwindigkeitsprofil eine im Startpunkt vorliegende und eine im Zielpunkt zu erwartende Geschwindigkeit und Beschleunigung stetig fortgesetzt. Letztere sind vorzugsweise eine Fördergeschwindigkeit bzw. eine Förderbeschleunigung des aufzunehmenden oder des abzusetzenden Objekts im Zielpunkt. Dabei werden die jeweiligen, zum Abfahren der Polynombahn rechnerisch ermittelten Koordinaten des Aufnehmers des mehrachsigen Handlingsgerätes über eine Kinematiktransformation in die jeweiligen Achskoordinaten des mehrachsigen Handlingsgerätes umgerechnet.

Im Schritt S6 erfolgt nach Erreichen der Zielposition die Aufnahme bzw. das Absetzen des aufzusynchronisierenden Objektes.

Mit S7 ist das Programmende bezeichnet.

Das zuvor beschriebene, mittels des Bahnaufsynchronisier-Programmmoduls durchführbare erfindungsgemäße Verfahren kann vorteilhaft zum aufsynchronisierten Aufnehmen von Objekten, die von einer Fördereinrichtung mitgeführt werden, und/oder zum aufsynchronisierten Absetzen von bereits aufgenommenen Objekten auf einer Fördereinrichtung, angewendet werden. Weiterhin kann das erfindungsgemäße Verfahren besonders vorteilhaft zum Verpacken von Verpackungsobjekten mittels einer mehrachsigen Verpackungsmaschine, insbesondere mittels eines Pickers, angewendet werden. Das zugehörige Bahnaufsynchronisier-Programmmodul kann in maschinenlesbarer Form auf einem Datenspeichermedium gespeichert sein, wie z.B. auf einer DVD oder auf einer Flash-Speicherkarte. Das Bahnaufsynchronisier-Programmmodul weist hierzu die zur Ausführung des erfindungsgemäßen Verfahrens auf einer Steuereinheit des Steuergerätes zum Steuern des Handlingsgerätes notwendigen Programmschritte S0-S7 auf.

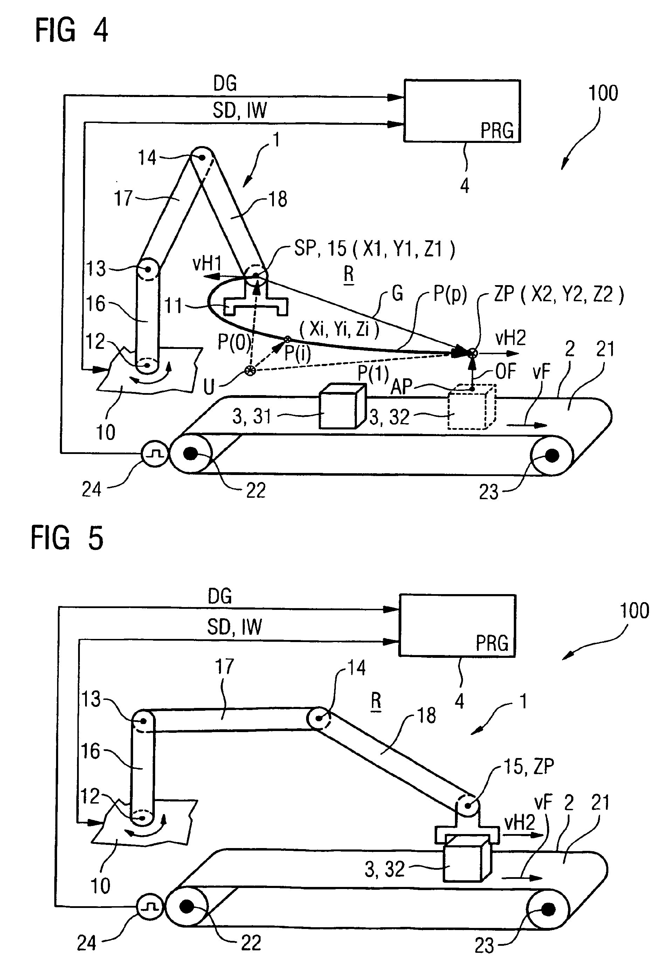

FIG 4 zeigt beispielhaft einen Verbund 100 aus einem Handlingsgerät 1 mit einem Aufnehmer 11 am Anfang einer Aufsynchronisierung und aus einem Steuergerät 4. Im Beispiel der vorliegenden FIG 4 weist der Verbund 100 zusätzlich eine Fördereinrichtung 2 auf.

Im mittleren Teil der FIG 4 ist ein mehrachsiges Handlingsgerät 1 mit einem Aufnehmer 11 zum Aufnehmen von Objekten 3 dargestellt. Bei dem Objekt 3 handelt es sich beispielhaft um ein würfelförmiges Paket. Das gezeigte Handlingsgerät 1 bzw. der Roboter weist vier rotatorische Achsen 12-15 mit dazwischen liegenden Rotorarmen 16-18 auf. Mit dem Bezugszeichen 10 ist eine ortsfeste Basis des Roboters 1 und mit 11 der Aufnehmer oder Greifer zum Aufnehmen und Absetzten der Objekte 3 bezeichnet. Die Anordnung der Achsen 12-15 erlaubt eine dreidimensionale Bewegung des Aufnehmers 11 in einem Arbeitsraum R. Desweiteren kann der Aufnehmer 11 um die Achse 15 geschwenkt werden, um das Objekt 3 lagerichtig aufnehmen bzw. absetzen zu können. Mit KEP ist ein sogenannter kinematischer Endpunkt bezeichnet, welcher den räumlichen Endpunkt für die rechnerische Bahnberechnung bildet.

Ein entsprechender, von den Abmessungen des Aufnehmers 11 abhängiger Offset-Vektor OF dient zur rechnerischen Korrektur des kinematischen Endpunkts KEP zu einem ausgewählten Aufnahmepunkt AP des Objektes 3.

Im unteren Teil der FIG 4 ist eine Fördereinrichtung 2 in Form eines Laufbandes zum Vorbeiführen der aufzunehmenden Objekte 3 gezeigt. Das Laufband 2 weist ein Förderband 21 auf, welches vorzugsweise mit konstanter Geschwindigkeit vF über zwei Walzen 22, 23 angetrieben wird. Es kann auch nur eine der beiden Walzen 22, 23 angetrieben sein. Ein Drehgeber 24 an einer der Walzen 22 dient der Erfassung von Wegimpulsen.

Im oberen Teil der FIG 4 ist ein Steuergerät 4 dargestellt, welches eine nicht weiter dargestellte prozessorgestützte Steuereinheit unter anderem zum Ausführen eines Bahnaufsynchronisier-Programmmodul aufweist. Das Bahnaufsynchronisier-Programmmodul umfasst Programmschritte zur Durchführung des erfindungsgemäßen Verfahrens zum Aufsynchronisieren des Aufnehmers 11 mit dem im Beispiel gezeigten, aufzunehmenden Objekt 3 entlang der eingetragenen Polynombahn P(p).

Das Steuergerät 4 ist zur Durchführung des erfindungsgemäßen Verfahrens mit einem nicht weiter dargestellten Antrieb des Handlingsgerätes 1 zur Ausgabe von Stellkoordinaten SD für den Aufnehmer 11 verbunden. Auf umgekehrtem Weg empfängt das Steuergerät 4 zur Steuerung des Aufnehmers 11 aktuelle Koordinaten-Istwerte IW. Im Beispiel der FIG 4 ist das Steuergerät 4 mit dem Drehgeber 24 zur Wegerfassung des beförderten Objektes 3 verbunden. Auf Basis der erfassten Wegimpulse kann durch das Steuergerät 4 die aktuelle Position des Objektes 3 ermittelt werden.

Im Beispiel der FIG 4 befindet sich der Aufnehmer 11 des Handlingsgerätes 1 im Startpunkt SP. Entsprechend der Vorgabe durch das Steuergerät 4, ein Objekt 3 aufzunehmen, wird nun der Aufnehmer 11 am Anfang der Aufsynchronisierung entlang der gezeigten Polynombahn P(p) geführt. Mit dem Bezugszeichen 31 ist dabei das aufzunehmende Objekt 3 am Anfang der Aufsynchronisierung und mit 32 das Objekt am Ende der Aufsynchronisierung bezeichnet. Mit SP ist der Startpunkt des Aufnehmers 11 - hier in Bezug auf den kinematischen Endpunkt KEP - bezeichnet. Die zugehörigen dreidimensionalen, kartesischen Startpunkt-Koordinaten X1, Y1, Z1 sind in Klammern gesetzt. Mit ZP ist der Zielpunkt des Aufnehmers 11 bezeichnet, an welchen der kinematische Endpunkt KEP zu verfahren ist, um dann dort das Objekt 3, 32 aufzunehmen. Die zugehörigen dreidimensionalen, kartesischen Zielpunkt-Koordinaten X2, Y2, Z2 sind wiederum in Klammern gesetzt. Weiterhin ist mit G die kürzeste Strecke, also eine Gerade, eingetragen, entlang welcher nach dem Stand der Technik der Aufnehmer 11 verfahren werden würde.

Erfindungsgemäß wird der Aufnehmer 11 mit einem aufzunehmenden Objekt 3, 32, welches von der Fördereinrichtung 2 mitgeführt wird, aufsynchronisiert, wobei der Aufnehmer 11 entlang der rechnerisch ermittelten Polynombahn P(p) mindestens der 3. Ordnung zwischen einem Startpunkt SP und einem Zielpunkt ZP aufsynchronisiert wird. Im Beispiel der FIG 4 weist die Polynombahn P(p) eine 5. Ordnung auf, wobei aus Gründen der Übersichtlichkeit für das vorliegende Beispiel die zugehörigen Tangenten- und Krümmungsvektoren im Start- und Zielpunkt SP, ZP nicht eingetragen sind. Dagegen sind im Start- und Zielpunkt SP, ZP die beim Abfahren der Polynombahn P(p) über das Geschwindigkeitsprofil p(t) resultierenden Geschwindigkeitsvektoren vH1, vH2 eingetragen.

Mit P(0) ist ein Ortsvektor der Polynombahn P(p) eingetragen, welcher auf den Beginn der Aufsynchronisierung zeigt. Mit P(1) ist ein Ortsvektor eingetragen, welcher auf das Ende der Aufsynchronisierung zeigt. Stellvertretend für dazwischenliegende Stützpunkte für das Abfahren der Polynombahn P(p) ist ein weiterer Ortsvektor P(i) mit den Koordinaten Xi, Yi, Zi eingetragen. Mit U ist ein ortsfester Ursprung für das hier zugrundegelegte Koordinatensystem bezeichnet.

Zur Berechnung des Bahnpolynoms P(p) der 5. Ordnung müssen die eingangs beschriebenen Randbedingungen erfüllt sein, dass heißt, es müssen der Start- und Zielpunkt SP, ZP sowie die jeweiligen Tangenten- und Krümmungsvektoren bestimmt werden.

Die resultierende Polynombahn P(p) ist dann im Start- und Zielpunkt SP, ZP tangential- und krümmungsstetig. Dies soll der sanft geschwungene Verlauf der Polynombahn P(p) verdeutlichen. Wird diese Polynombahn P(p) über ein geschwindigkeits- und zugleich beschleunigungsstetiges Geschwindigkeitsprofil abgefahren, so kann der Abnehmer 11 des Handlingsgerätes 1 richtungsgleich und ruckbegrenzt vom Startpunkt SP in den Zielpunk ZP zur Aufnahme des Objektes 3 sanft einschwenken. Wesentlich ist bei dem Geschwindigkeitsprofil p(t) als Funktion von der Zeit t, dass dieses ruckbegrenzt ist, das heißt dass die beim Abfahren der Polynombahn (p) auftretenden Beschleunigungen zumindest für einen Streckenabschnitt der Polynombahn P(p) begrenzt sind und für die verbleibenden Streckenabschnitte unter dem begrenzten Beschleunigungswert liegen.

Im vorliegenden Beispiel ist der Aufnehmer 11 im Startpunkt SP gerade noch in Bewegung, verdeutlicht durch den Geschwindigkeitsvektor vH1 im Startpunkt SP. Eine derartige Situation liegt z.B. dann vor, wenn eine aus einem vorherigen "Transportauftrag" transportierte Ware 3 zum Abladen mit einer anderen Fördereinrichtung 2 aufsynchronisiert worden ist. Wie die FIG 4 zeigt, fährt der Aufnehmer 11 auf dem Weg zum Zielpunkt ZP zuerst noch ein Stück weiter in der vorherigen Richtung, um dann sanft und ruckbegrenzt zum Zielpunkt ZP in Richtung des gezeigten Geschwindigkeitsvektors vH2 einzuschwenken. Dabei stimmt der Geschwindigkeitsvektors vH2 im Zielpunkt ZP im Wesentlichen mit dem Geschwindigkeitsvektor vF des aufzunehmenden Objektes 3 und folglich mit der Fördergeschwindigkeit vF der Fördereinrichtung 2 überein.

FIG 5 zeigt das Beispiel gemäß FIG 4 mit dem Aufnehmer 11 am Ende einer Aufsynchronisierung zur Aufnahme eines Objektes 3.

Der ausgefahrene Aufnehmer 11 nimmt nun das aufzunehmende Objekt 3 auf. Dabei bewegt sich der Aufnehmer 11 richtungs- und geschwindigkeitsgleich, also synchron, mit dem Objekt 3. Zur Aufnahme des Objektes 3 erhält das Handlingsgerät 1 einen entsprechenden Steuerbefehl, um nicht weiter gezeigte Greifwerkzeuge des Aufnehmers 11 zum Schließen anzusteuern.

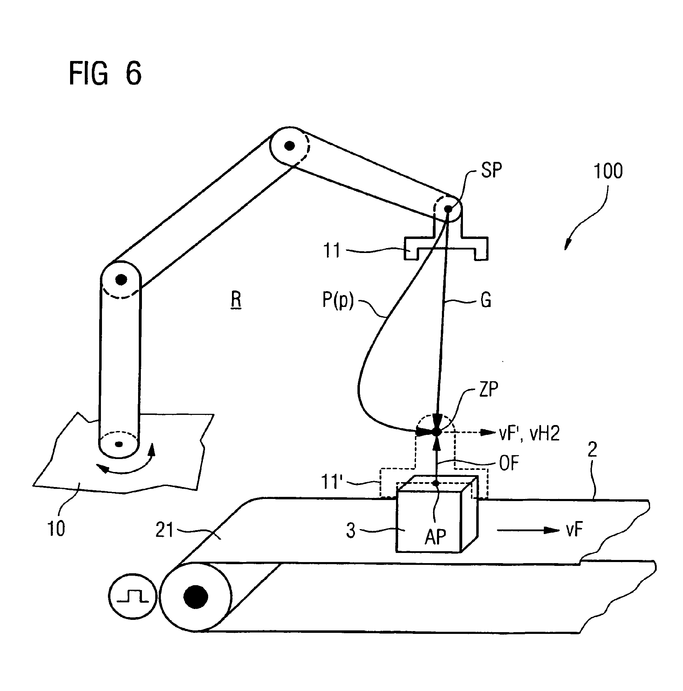

FIG 6 zeigt ein weiteres Beispiel für einen Verbund 100. Zum besseren Verständnis des erfindungsgemäßen Verfahrens sind nun der Start- und Zielpunkt SP, ZP des Aufnehmers 11 gemeinsam in der FIG 6 dargestellt. In dieser vergrößerten Darstellung ist das richtungs- und geschwindigkeitsgleiche Aufsynchronisieren des Aufnehmers 11 mit dem aufzunehmenden Objekt 3 im Zielpunkt ZP besonders gut erkennbar. Zugleich erfolgt das Aufsynchronisieren beschleunigungsstetig mit dem aufzunehmenden Objekt 3. Mit 11' ist Endstellung des Aufnehmers 11 am Ende der Aufsynchronisierung dargestellt. Der Geschwindigkeitsvektor vF' soll verdeutlichen, dass die Geschwindigkeit vH2 des Aufnehmers 11' im Zielpunkt ZP mit der Fördergeschwindigkeit vF übereinstimmt. Zum Vergleich ist die beim Stand der Technik übliche geradlinige Bewegungsbahn G eingetragen.

## Patentansprüche

1. Verfahren zum Aufsynchronisieren eines Aufnehmers (11) eines mehrachsigen Handlingsgerätes (1) mit einem aufzunehmenden Objekt (3), welches von einer Fördereinrichtung (2) mitgeführt wird, und/oder zum Aufsynchronisieren des Aufnehmers (11) mit einer bewegten Fördereinrichtung (2), um gegebenenfalls dort ein bereits aufgenommenes Objekt (3) abzusetzen, wobei der Aufnehmer (11) entlang einer Bewegungsbahn zwischen einem Startpunkt (SP) und einem Zielpunkt (ZP) aufsynchronisiert wird, **dadurch gekennzeichnet ,**

   - **dass** der Aufnehmer (11) entlang einer rechnerisch ermittelten Polynombahn P(p) mindestens der 3. Ordnung aufsynchronisiert wird, wobei die Polynombahn P(p) eine Polynombahn P(p) der 5. Ordnung ist und wobei die Polynombahn P(p) über den Startpunkt (SP), den Zielpunkt (ZP), über einen jeweiligen Tangentenvektor (tSP, tZP) im Start- und Zielpunkt (SP, ZP) und über einen jeweiligen Krümmungsvektor (kSP, kZP) im Start- und Zielpunkt (SP, ZP) festgelegt wird und wobei dem Startpunkt-Tangentenvektor (tSP) beim Aufsynchronisieren des Aufnehmers (11) aus dem Stillstand eine zum Zielpunkt (ZP) weisende Richtung zugewiesen wird und wobei dem Startpunkt-Krümmungsvektor (kSP) ein Nullvektor zugewiesen wird,
   - **dass** die Polynombahn P(p) über ein geschwindigkeitsstetiges Geschwindigkeitsprofil p(t) abgefahren wird, und
   - **dass** durch das Geschwindigkeitsprofil p(t) eine im Startpunkt (SP) vorliegende und eine im Zielpunkt (ZP) zu erwartende Geschwindigkeit (vH1, vH2) stetig fortsetzt wird, wobei die stetig fortzusetzende Geschwindigkeit (vH2) eine Fördergeschwindigkeit (vF) des aufzunehmenden oder des abzusetzenden Objekts (3) im Zielpunkt (ZP) ist.

2. Verfahren nach einem der vorangegangenen Ansprüche, wobei die Polynombahn P(p) über ein zusätzlich beschleunigungsstetiges Geschwindigkeitsprofil p(t) abgefahren wird.

3. Verfahren nach Anspruch 2, wobei durch das Geschwindigkeitsprofil p(t) eine im Startpunkt (SP) vorliegende und eine im Zielpunkt (ZP) zu erwartende Beschleunigung stetig fortsetzt wird.

4. Verfahren nach Anspruch 3, wobei die stetig fortzusetzende Beschleunigung eine Förderbeschleunigung des aufzunehmenden oder abzusetzenden Objekts (3) im Zielpunkt (ZP) ist.

5. Verfahren nach einem der vorangegangenen Ansprüche, wobei die Polynombahn P(p) eine zwei- oder dreidimensionale Polynombahn P(p) ist.

6. Verfahren nach einem der vorangegangenen Ansprüche, wobei die jeweiligen, zum Abfahren der Polynombahn P(p) rechnerisch ermittelten Koordinaten (Xi, Yi, Zi) des Aufnehmers (11) des mehrachsigen Handlingsgerätes (1) über eine Kinematiktransformation in die jeweiligen Achskoordinaten des mehrachsigen Handlingsgerätes (1) umgerechnet werden.

7. Anwendung des Verfahrens nach einem der Ansprüche 1 bis 6 zum aufsynchronisierten Aufnehmen von Objekten (3), die von einer Fördereinrichtung (2) mitgeführt werden, und/oder zum aufsynchronisierten Absetzen von bereits aufgenommenen Objekten (3) auf einer Fördereinrichtung (2).

8. Anwendung des Verfahrens nach einem der Ansprüche 1 bis 6 zum Verpacken von Verpackungsobjekten (3) mittels einer mehrachsigen Verpackungsmaschine (1), insbesondere mittels eines Pickers.

9. Datenspeichermedium mit einem in maschinenlesbarer Form gespeicherten Bahnaufsynchronisier-Programmmodul (PRG) zur Durchführung des Verfahrens nach einem der vorangegangenen Ansprüche 1 bis 6 auf zumindest einem Steuergerät (4) zum Steuern eines jeweiligen Aufnehmers (11) zumindest eines mehrachsigen Handlingsgerätes (1).

10. Steuergerät zum Steuern eines Aufnehmers (11) zumindest eines mehrachsigen Handlingsgerätes (1), wobei der jeweilige Aufnehmer (11) zum Aufnehmen von Objekten (3), die von zumindest einer Fördereinrichtung (2) mitgeführt werden, und/oder zum Absetzen von bereits aufgenommenen Objekten (3), die auf der zumindest einen Fördereinrichtung (2) abgesetzt werden sollen, vorgesehen ist, wobei das Steuergerät mit einem Antrieb des jeweiligen Handlingsgerätes (1) zur Ausgabe von Stellkoordinaten (SD) für den jeweiligen Aufnehmer (11) verbunden ist, wobei das Steuergerät mit Mitteln zur Weg- und Geschwindigkeitserfassung der jeweiligen Fördereinrichtung (2) bzw. der jeweiligen mitgeführten Objekte (3) verbunden ist und wobei das Steuergerät eine prozessorgestützte Steuereinheit zum Ausführen zumindest eines Bahnaufsynchronisier-Programmmoduls (PRG) zur Durchführung des Verfahrens nach einem der Ansprüche 1 bis 6 aufweist.

11. Mehrachsiges Handlingsgerät enthaltend einen Aufnehmer (11) zum Aufnehmen von Objekten (3), die von zumindest einer Fördereinrichtung (2) mitgeführt werden, und/oder zum Absetzen von bereits aufgenommenen Objekten (3), die auf der zumindest einen Fördereinrichtung (2) abgesetzt werden sollen, und enthaltend ein einem Steuergerät (4) nach Anspruch 10 zum Steuern des Aufnehmers (11) des Handlingsgerätes (1).

**Claims**

1. Method for synchronising a pickup (11) of a multi-axis handling device (1) with an object (3) to be picked up, which is carried along by a conveyor device (2), and/or for synchronising the pickup (11) with a moving conveyor device (2) in order to put an object (3) already picked up down onto it if necessary, wherein the pickup (11) is synchronised along a movement path between a starting point (SP) and a destination point (ZP), **characterised in**

   - **that** the pickup (11) is synchronised along a computationally-determined polynomial path P(p) of at least the $3^{rd}$ order, wherein the polynomial path P(p) is a polynomial path P(p) of the 5th order and wherein the polynomial path P(p) is defined via the starting point (SP), the destination point (ZP), via a respective tangent vector (tSP, tZP) in the starting and destination point (SP, ZP) and via a respective curvature vector (kSP, kZP) in the starting and destination point (SP, ZP), and wherein the starting point tangent vector (tSP), on synchronisation of the pickup (11) from standstill, is allocated a direction pointing to the destination point (ZP) and wherein the starting point curvature vector (kSP) is allocated a zero vector.
   - **that** the polynomial path P(p) is followed via a speed profile with speed continuity p(t), and
   - **that** a speed (vH1, vH2) present in the starting point (SP) and to be expected in the destination point (ZP) is continued with continuity by the speed profile p(t), wherein the speed to be continued with continuity (vH2) is a speed of conveyance (vF) of the object (3) to be picked up or put down in the destination point (ZP).

2. Method according to one of the preceding claims, wherein the polynomial path P(p) is followed via an additional speed profile p(t) with continuity of acceleration.

3. Method according to claim 2, wherein an acceleration present at the starting point (SP) and to be expected at the destination point (ZP) is continued with continuity by the speed profile p(t).

4. Method according to claim 3, wherein the acceleration to be continued with continuity is a conveyance acceleration of the object (3) to be picked up or put down at the destination point (ZP).

5. Method according to one of the preceding claims, wherein the polynomial path P(p) is a two- or three-dimensional polynomial path P(p).

6. Method according to one of the preceding claims, wherein the coordinates (Xi, Yi, Zi) of the pickup (11) of the multi-axis handling device (1) determined computationally in each case for following the polynomial path P(p) are transformed via a kinematical transformation into the respective axis coordinates of the multi-axis handling device (1).

7. Application of the method according to one of claims 1 to 6 for synchronised picking up of objects (3) which are carried along by a conveyor device (2), and/or for synchronised putting down onto a conveyor device (2) of objects (3) already picked up.

8. Application of the method according to one of claims 1 to 6 for packing packaged objects (3) by means of a multi-axis packaging machine (1), especially by means of a picker.

9. Data storage medium with a path synchronisation program module (PRG) stored in machine-readable form for carrying out the method according to one of the preceding claims 1 to 6 on at least one control device (4) for controlling a respective pickup (11) of at least one multi-axis handling device (1).

10. Control device for controlling a pickup (11) of at least one multi-axis handling device (1), wherein the respective pickup (11) is provided for picking up objects (3) which are carried along by at least one conveyor device (2) and/or for putting down objects (3) already picked up which are to be put down onto the least one conveyor device (2), wherein the control device is linked to a drive of the respective handling device (1) for outputting setting coordinates (SD) for the respective pickup (11), wherein the control device is connected to means for detecting distance and speed of the respective conveyor device (2) or of the respective objects (3) carried along on it and wherein the control device has a processor-assisted control unit for executing at least one path synchronisation program module (PRG) for executing the method according to one of the claims 1 to 6.

11. Multi-axis handling device containing a pickup (11) for picking up objects (3) which are carried along by at least one conveyor device (2) and/or for putting down objects (3) already picked up which are to be put down onto a least one conveyor device (2), and containing a control device (4) according to claim 10 for controlling the pickup (11) of the handling device (1).

## Revendications

1. Procédé de synchronisation d'un récepteur (11) d'un appareil ( 1 ) de manipulation à plusieurs axes avec un objet ( 3 ) à recevoir qui est entraîné par un dispositif ( 2 ) convoyeur et/ou de synchronisation du récepteur ( 11 ) avec un dispositif ( 2 ) convoyeur en déplacement pour, le cas échéant, y déposer un objet ( 3 ) déjà reçu, le récepteur ( 11 ) étant synchronisé le long d'une voie de déplacement entre un point (SP) de départ et un point ( ZP ) de destination, **caractérisé**

   - **en ce que** le récepteur ( 11 ) est synchronisé le long d'un chemin P( p ) polynomial d'au moins du troisième ordre déterminé par calcul, le chemin P( p ) polynomial étant un chemin P( p ) polynomial du cinquième ordre et le chemin P ( p ) polynomial étant fixé par le point ( SP ) de départ, par le point ( ZP ) de destination, par un vecteur ( tSP , tZP) ) tangentiel respectif au point ( SP ) de départ et au point ( ZP ) de destination et par un vecteur ( kSP, kZP ) de courbure respective au point ( SP ) de départ et au point

   ( 2P ) de destination et dans lequel il est affecté, au vecteur ( tSP ) tangentiel au point de départ, un sens allant vers le point ( 2P ) de destination lors de la synchronisation du récepteur ( 11 ) à partir de l'état de repos et dans lequel il et affecté un vecteur nul au vecteur ( kSP ) de courbure au point de départ,

   - **en ce que** le chemin P ( p ) polynomial est parcouru sur un profil p ( t ) de vitesse à vitesse constante, et
   - **en ce que** l'on continue constamment par le profil p ( t ) de vitesse, une vitesse ( vH1 ) présente au point ( SP ) de départ et une vitesse ( vH2 ) escomptée au point ( ZP ) de destination, la vitesse ( vH2 ) se continuant constamment, étant une vitesse ( vF ) de convoyage de l'objet ( 3 ) à recevoir ou à déposer au point ( ZP ) de destination.

2. Procédé suivant la revendication précédente, dans lequel le chemin P( p ) polynomial et parcouru sur un profil p( t ) de vitesse supplémentairement à accélération constante.

3. Procédé suivant la revendication 2, dans lequel on continue constamment par le profil p( t ) de vitesse une accélération présente au point ( SP ) de départ et une accélération escomptée au point ( ZP ) de destination.

4. Procédé suivant la revendication 3, dans lequel l'accélération se continuant constamment est une accélération de convoyage de l'objet ( 3 ) à recevoir ou à déposer au point ( ZP ) de destination.

**5.** Procédé suivant l'une des revendications précédentes, dans lequel le chemin P( p ) polynomial et un chemin P( p ) polynomial en deux dimensions ou en trois dimensions.

**6.** Procédé suivant l'une des revendications précédentes, dans lequel les coordonnées ( $X_i$ , $Y_i$ , $Z_i$ ) du récepteur ( 11 ) de l'appareil ( 1 ) de manipulation à plusieurs axes déterminés par le calcul pour le parcours du chemin P( p ) polynomial sont recalculées par une transformation cinématique en les coordonnées d'axes respectives de l'appareil ( 1 ) de manipulation à plusieurs axes.

**7.** Utilisation du procédé suivant l'une des revendications 1 à 6, pour la réception synchronisée d'objets ( 3 ) qui sont entraînés par un dispositif ( 2 ) convoyeur et/ou pour le dépôt synchronisé d'objets ( 3 ) déjà reçus sur un dispositif ( 2 ) convoyeur.

**8.** Utilisation du procédé suivant l'une des revendications 1 à 6, pour emballer des objets ( 3 ) d'emballage au moyen d'une machine ( 1 ) d'emballage à plusieurs axes, notamment d'un picker.

**9.** Support de mémoire de données, ayant un module ( PRG ) de programme de synchronisation de chemin mémorisé sous une forme exploitable par une machine pour effectuer le procédé suivant l'une des revendications précédentes 1 à 6 sur au moins un appareil ( 4 ) de commande d'un récepteur ( 11 ) respectif d'au moins un appareil ( 1 ) de manipulation à plusieurs axes.

**10.** Appareil de commande d'un récepteur ( 11 ) d'au moins un appareil ( 1 ) de manipulation à plusieurs axes, le récepteur ( 11 ) respectif étant prévu pour recevoir des objets ( 3 ) qui sont entraînés par au moins un dispositif ( 2 ) convoyeur et/ou pour déposer des objets ( 3 ) déjà reçus qui doivent être déposés sur le au moins un dispositif ( 2 ) convoyeur, l'appareil de commande étant relié à un entraînement de l'appareil ( 1 ) de manipulation respectif pour l'émission de coordonnées ( SD ) de position du récepteur ( 11 ) respectif, l'appareil de commande étant relié à des moyens de détection du trajet de la vitesse du dispositif ( 2 ) convoyeur respectif ou des objets ( 3 ) respectifs entraînés et l'appareil de commande ayant une unité de commande assistée par processeur pour l'exécution d'au moins un module ( PRG ) de programme de synchronisation de chemin afin d'effecter le procédé suivant l'une des revendications 1 à 6.

**11.** Appareil de manipulation à plusieurs axes comportant un récepteur ( 11 ) de réception d'objets ( 3 ) qui sont entraînés par au moins un dispositif ( 2 ) convoyeur et/ou pour le dépôt d'objets ( 3 ) déjà reçus qui doivent être déposés sur le au moins un dispositif ( 2 ) convoyeur, et comportant un appareil ( 4 ) de commande suivant la revendication 10 pour la commande du récepteur ( 11 ) de l'appareil ( 1 ) de manipulation.

# FIG 1

$0 \leq p \leq 1$

# FIG 2

FIG 3

START — S0

Initialisieren — S1

Ermitteln des Startpunkts sowie des Tangentenvektors und des Krümmungsvektors im Startpunkt — S2

Ermitteln des voraussichtlichen Zielpunkts der Polynombahn sowie des zugehörigen Tangentenvektors und Krümmungsvektors im Zielpunkt zum Aufsynchronisieren im Zielpunkt — S3

Berechnen der Polynombahn der 5. Ordnung — S4

Abfahren der Polynombahn über ein geschwindigkeits- und beschleunigungs-stetiges Geschwindigkeitsprofil — S5

Aufnehmen bzw. Absetzen des Objekts — S6

ENDE — S7

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1935788 A1
- US 4663726 A
- JP 2006347754 A
- US 3283918 A